# EUROPÄISCHE PATENTANMELDUNG

(11) **EP 4 752 279 A1**
(43) Veröffentlichungstag der Anmeldung: **03.06.2026**
(21) Anmeldenummer: 24216450.7
(22) Anmeldetag: 29.11.2024
(51) Int. Cl.: E01C 19/48, B60K 6/48

(54) **STRASSENBAUMASCHINE MIT PARALLELEM HYBRIDANTRIEB**

(71) Anmelder: Joseph Vögele AG, 67067 Ludwigshafen (DE)
(72) Erfinder: SIMON, Stefan, 67141 Neuhofen (DE); WEISER, Ralf, 68526 Ladenburg (DE); SIEBERT, Jan, 76131 Karlsruhe (DE)
(74) Vertreter: Grünecker Patent- und Rechtsanwälte PartG mbB

(57) **Zusammenfassung**

Die Erfindung betrifft eine Straßenbaumaschine (1), insbesondere einen Straßenfertiger (1) oder einen Beschicker. Die Straßenbaumaschine (1) umfasst einen Primärantrieb (12), eine elektrische Maschine (14), ein Getriebe (13) und wenigstens einen Verbraucher (16), der mit dem Getriebe (13) verbunden ist. Der Primärantrieb (12) und die elektrische Maschine (14) sind ebenfalls mit dem Getriebe (13), insbesondere kraftübertragend, leistungsübertragend und/oder energieübertragend, verbunden. Die elektrische Maschine (14) ist dazu ausgebildet, generatorisch und motorisch betrieben zu werden Die Erfindung betrifft des Weiteren ein Verfahren zum Betrieb einer Straßenbaumaschine (1) und die Verwendung eines parallelen Hybridantriebs in einer Straßenbaumaschine (1).

## Beschreibung

Die vorliegende Erfindung betrifft eine Straßenbaumaschine, ein Verfahren zum Betrieb einer Straßenbaumaschine sowie eine Verwendung eines parallelen Hybridantriebs in einer Straßenbaumaschine. Die Straßenbaumaschine ist insbesondere ein Straßenfertiger.

Die Verwendung von Hybridantrieben, also die Kombination eines Primärantriebs, insbesondere eines Verbrennungsmotors, und eines elektrischen Antriebs, in Straßenbaumaschinen ist bekannt. Der Stand der Technik lehrt jedoch in Straßenbaumaschinen, insbesondere in Straßenfertigern, nur die Verwendung von seriellen Hybridantrieben.

Beispielsweise ist aus der EP2333158B1 ein Straßenfertiger bekannt, der einen Generator aufweist, der von einer Primärenergiequelle mit elektrischer Energie versorgt wird. Weitere serielle Hybridantriebe in Straßenfertigern sind aus der CN112195730A und der DE9308802U1 bekannt.

Serielle Hybridantriebe haben unter anderem den Nachteil, dass die vom Primärantrieb erzeugte Energie häufig umgewandelt werden musst. Zudem müssen der Primärantrieb und der elektrische Antrieb bzw. elektrische Generator so groß dimensioniert werden, dass beide die geforderte Nennleistung des Antriebsstrangs übertragen können.

Aufgabe der vorliegenden Erfindung ist es, ein kompaktes und effizientes Antriebskonzept für eine Straßenbaumaschine bereitzustellen. Gelöst wird diese Aufgabe durch eine Straßenbaumaschine gemäß Anspruch 1, ein Verfahren zum Betrieb einer Straßenbaumaschine gemäß Anspruch 11 oder eine Verwendung eines parallelen Hybridantriebs in einer Straßenbaumaschine gemäß Anspruch 15.

Gemäß einem ersten Aspekt der Erfindung umfasst eine Straßenbaumaschine einen Primärantrieb, eine elektrische Maschine, ein Getriebe und wenigstens einen Verbraucher. Der wenigstens eine Verbraucher ist mit dem Getriebe, insbesondere einem Abtrieb des Getriebes, verbunden. Die Verbindung zwischen dem Verbraucher und dem Getriebe ist insbesondere eine kraftübertragende, leistungsübertragende und/oder energieübertragende Verbindung. Vorzugsweise ist die Verbindung zwischen dem Verbraucher und dem Getriebe eine kraftübertragende Verbindung. Der Primärantrieb und die elektrische Maschine sind mit dem Getriebe verbunden. Die Verbindung zwischen dem Primärantrieb und dem Getriebe ist insbesondere eine kraftübertragende, leistungsübertragende und/oder energieübertragende Verbindung. Vorzugsweise ist die Verbindung zwischen dem Primärantrieb und dem Getriebe eine kraftübertragende Verbindung. Die Verbindung zwischen der elektrischen Maschine und dem Getriebe ist insbesondere eine kraftübertragende, leistungsübertragende und/oder energieübertragende Verbindung. Vorzugsweise ist die Verbindung zwischen der elektrischen Maschine und dem Getriebe ist eine kraftübertragende Verbindung. Unter einer kraftübertragenden Verbindung wird insbesondere eine Verbindung verstanden, durch welche mechanische Energie bzw. eine Kraft und/oder ein Drehmoment von einer ersten Komponente zu einer zweiten Komponente übertragen werden kann. Unter dem Begriff "kraftübertragend" kann insbesondere verstanden werden, dass keine (zwischenzeitliche) Umwandlung in elektrische Energie erfolgt. Die kraftübertragende Verbindung kann mehrere Komponenten umfassen, das heißt die Kraftübertragung kann auch indirekt erfolgen. Die kraftübertragende Verbindung kann das zwischenzeitliche Umwandeln der Kraft bzw. des Drehmoments in hydraulische Energie umfassen. Unter einer kraftübertragenden Verbindung kann insbesondere eine Verbindung verstanden werden, durch die mechanische Energie bzw. eine Kraft und/oder ein Drehmoment von einer ersten Komponente ohne Umwandlung in elektrische Energie auf eine zweite Komponente übertragbar ist.

Die Straßenbaumaschine kann einen oder mehrere Primärantriebe aufweisen. Die Straßenbaumaschine kann eine oder mehrere elektrische Maschinen aufweisen. Die Straßenbaumaschine kann ein oder mehrere Getriebe aufweisen.

Die elektrische Maschine ist dazu ausgelegt, ausgebildet und/oder konfiguriert, generatorisch und motorisch betrieben zu werden. Die elektrische Maschine kann dazu ausgelegt sein, im generatorischen Betrieb vom Primärantrieb erzeugte mechanische Energie in elektrische Energie umzuwandeln. Die elektrische Maschine kann dazu ausgelegt sein, im motorischen Betrieb elektrische Energie in mechanische Energie umzuwandeln und insbesondere damit das Getriebe anzutreiben.

Der Primärantrieb und die elektrische Maschine sind insbesondere als paralleler Hybridantrieb ausgebildet.

Die Kraftübertragung, Leistungsübertragung und/oder Energieübertragung zwischen dem Getriebe und dem Primärantrieb kann insbesondere mechanisch und/oder hydraulisch erfolgen. Die Kraftübertragung, Leistungsübertragung und/oder Energieübertragung zwischen dem Getriebe und der elektrischen Maschine kann insbesondere hydraulisch und/oder mechanisch erfolgen. Die Kraftübertragung, Leistungsübertragung und/oder Energieübertragung zwischen dem Verbraucher und dem Primärantrieb kann insbesondere hydraulisch und/oder mechanisch erfolgen.

Die von dem Primärantrieb erzeugte mechanische Energie wird insbesondere direkt auf das Getriebe übertragen und nicht beispielsweise zuvor in elektrische Energie umgewandelt.

Die elektrische Maschine ist insbesondere dazu ausgelegt, motorisch und generatorisch betrieben zu werden. Im generatorischen Betrieb kann die elektrische Maschine elektrische Energie erzeugen, insbesondere aus mechanischer Energie, die von dem Primärantrieb über das Getriebe zur elektrischen Maschine geleitet wird. Im motorischen Betrieb kann die elektrische Maschine mit elektrischer Energie betrieben werden und das Getriebe, insbesondere gemeinsam mit dem Primärantrieb, antreiben. Dadurch kann der Primärantrieb entlastet bzw. Ausfälle des Primärantriebs überbrückt werden. Der Primärantrieb kann durch gezieltes Zuschalten der elektrischen Maschine nahe am verbrauchsoptimalen Antriebspunkt betrieben werden. Zudem kann der Primärantrieb kleiner dimensioniert werden, da Belastungsspitzen durch Zuschalten der elektrischen Maschine ausgeglichen werden können.

Durch diesen hybriden Aufbau wird insbesondere der Kraftstoffverbrauch und die Schallemission reduziert.

Der Primärantrieb kann dazu konfiguriert sein, während eines Einbaustopps der Straßenbaumaschine automatisch abzuschalten. Der wenigstens eine Verbraucher kann während des Einbaustopps mit Energie aus einer Batterie versorgt werden. Die Batterie ist weiter unten näher beschrieben.

Die Straßenbaumaschine kann eine Bohlenheizung aufweisen. Die Straßenbaumaschine kann einen oder mehrere Nebenantriebe aufweisen. Die Bohlenheizung ist insbesondere lediglich als Beispiel angegeben und kann auch einen anderen elektrischen Verbraucher oder Nebenantrieb darstellen. Der Fachmann versteht, dass die nachfolgend geführte Diskussion und Erläuterungen zur Bohlenheizung auch auf andere elektrische Verbraucher bzw. Nebenantriebe zutreffen. Die Bohlenheizung und/oder andere elektrische Verbraucher können während des Einbaustopps mit Energie aus der Batterie versorgt werden.

Das Getriebe stellt insbesondere ein Verteilergetriebe dar. Das Getriebe stellt insbesondere ein Pumpenverteilergetriebe dar. Das Getriebe, insbesondere das Pumpenverteilergetriebe, ist insbesondere dazu ausgebildet, mechanische Energie zu übertragen, insbesondere zum wenigstens einen Verbraucher.

Die Straßenbaumaschine ist insbesondere ein Straßenfertiger oder ein Beschickerfahrzeug für einen Straßenfertiger. Der Straßenfertiger ist dazu ausgebildet, eine Einbauschicht aus einem Einbaumaterial herzustellen.

Der Primärantrieb und die elektrische Maschine können jeweils direkt oder über eine Kupplung, beispielsweise eine Hydraulikkupplung und/oder Reibkupplung, mit dem Getriebe verbunden sein. Beispielsweise kann der Primärantrieb direkt mit dem Getriebe verbunden sein und die elektrische Maschine über eine Kupplung, beispielsweise eine Hydraulikkupplung und/oder Reibkupplung, mit dem Getriebe verbunden sein, oder umgekehrt. Es können der Primärantrieb und die elektrische Maschine jeweils direkt mit dem Getriebe verbunden sein. Es können der Primärantrieb und die elektrische Maschine jeweils über eine Hydraulikkupplung mit dem Getriebe verbunden sein. Insbesondere erfolgt eine Kraftübertragung, Leistungsübertragung und/oder Energieübertragung von dem Primärantrieb zu dem Getriebe, gegebenenfalls über mögliche Zwischenstücke. Insbesondere erfolgt eine Kraftübertragung, Leistungsübertragung und/oder Energieübertragung von der elektrischen Maschine zu dem Getriebe bzw. von dem Getriebe zu der elektrischen Maschine, gegebenenfalls über mögliche Zwischenstücke. Der Begriff "direkt" kann insbesondere so verstanden werden, dass zwischen Primärantrieb und Getriebe bzw. zwischen elektrischer Maschine und Getriebe keine Umwandlung in elektrische Energie erfolgt. Eine beliebige andere Ausführung einer Kupplung kann ebenfalls verwendet werden.

In dieser Konfiguration ist das Getriebe insbesondere zwischen dem Primärantrieb und der elektrischen Maschine angeordnet. Der Primärantrieb kann mit einem Antrieb des Getriebes verbunden sein. Die elektrische Maschine kann mit einem Abtrieb des Getriebes verbunden sein. Die von dem Primärantrieb erzeugte mechanische Energie kann von dem Primärantrieb über das Getriebe auf die elektrische Maschine übertragen werden.

Die elektrische Maschine kann direkt oder über eine Kupplung, beispielsweise eine Hydraulikkupplung und/oder Reibkupplung, mit dem Getriebe verbunden sein. Der Primärantrieb kann indirekt, insbesondere über die elektrische Maschine, mit dem Getriebe verbunden sein. Die elektrische Maschine ist in diesem Fall insbesondere als Kurbelwellengenerator ausgebildet. Die elektrische Maschine kann zwischen dem Primärantrieb und dem Getriebe angeordnet sein. Die elektrische Maschine kann mit dem Primärantrieb verbunden sein.

Die Straßenbaumaschine kann derart ausgebildet bzw. konfiguriert sein, dass zwischen dem Primärantrieb und dem Getriebe keine Umwandlung in elektrische Energie erfolgt. Insbesondere kann keine Umwandlung von mechanischer Energie, die vom Primärantrieb erzeugt wird, in elektrische Energie erfolgen. Die vom Primärantrieb erzeugte Energie kann auf das Getriebe übertragen werden, ohne dass die Energie zwischenzeitlich in elektrische Energie umgewandelt wird. Der Primärantrieb erzeugt insbesondere eine mechanische Energie. Diese mechanische Energie wird insbesondere direkt, das heißt ohne Umwandlung in elektrische Energie, auf das Getriebe übertragen. Die Übertragung der mechanischen Energie vom Primärantrieb auf das Getriebe kann über ein oder mehrere Zwischenstücke erfolgen, d.h. die Übertragung kann direkt oder indirekt erfolgen. Die Übertragung der mechanischen Energie vom Primärantrieb auf das Getriebe kann über die elektrische Maschine erfolgen, wobei diese in solch einem Fall insbesondere als Kurbelwellengenerator ausgebildet ist. Die Übertragung der mechanischen Energie vom Primärantrieb auf das Getriebe kann über eine Kupplung, beispielsweise eine Hydraulikkupplung und/oder Reibkupplung, erfolgen. Die Übertragung der mechanischen Energie vom Primärantrieb auf das Getriebe kann die Umwandlung in hydraulische Energie umfassen. Die Übertragung der mechanischen Energie vom Primärantrieb auf das Getriebe umfasst insbesondere keine Umwandlung in elektrische Energie.

Die Straßenbaumaschine kann derart ausgebildet bzw. konfiguriert sein, dass zwischen dem Primärantrieb und dem wenigstens einen Verbraucher keine Umwandlung in elektrische Energie erfolgt. Eine Ausnahme können dabei elektrische Verbraucher darstellen, bei denen zwangsläufig zuvor eine Umwandlung in elektrische Energie erfolgt.

Die Straßenbaumaschine kann eine Batterie, insbesondere eine Hochvoltbatterie/Hochspannungsbatterie, aufweisen. Hochvolt bedeutet insbesondere 30 Volt bis 1000 Volt bei einer Wechselspannung beziehungsweise 60 Volt bis 1500 Volt bei einer Gleichspannung. Die elektrische Maschine kann dazu ausgebildet sein, die Batterie mit erzeugter Energie zu laden, insbesondere in einem generatorischen Betrieb. Die elektrische Maschine kann dazu ausgebildet sein, mit Energie aus der Batterie betrieben zu werden, insbesondere in einem motorischen Betrieb. Die Batterie einer Straßenbaumaschine mit einer Motornennleistung kleiner 200 kW kann eine Kapazität von 10 kWh bis 100 kWh aufweisen.

Solch eine Anordnung kann kompakter im Vergleich zur oben beschriebenen Anordnung sein. Solch eine Anordnung kann Bauraumvorteile haben.

Der Primärantrieb kann das Getriebe mechanisch antreiben. Die vom Primärantrieb erzeugte mechanische Energie wird insbesondere auf das Getriebe übertragen, ohne zuvor in elektrische Energie umgewandelt zu werden. Ein vom Primärantrieb erzeugtes Drehmoment bzw. eine erzeugte Rotation wird insbesondere auf das Getriebe übertragen.

Der Primärantrieb kann einen Verbrennungsmotor umfassen, insbesondere aus einem Verbrennungsmotor bestehen. Der Primärantrieb kann einen Dieselmotor umfassen, insbesondere aus einem Dieselmotor bestehen. Der Primärantrieb kann einen Benzinmotor umfassen, insbesondere aus einem Benzinmotor bestehen. Der Primärantrieb kann einen Wasserstoffmotor umfassen, insbesondere aus einem Wasserstoffmotor bestehen. Der Primärantrieb kann einen Gasmotor umfassen, insbesondere aus einem Gasmotor bestehen.

Die elektrische Maschine kann ein elektromagnetischer Wandler, beispielsweise eine permanenterregte Synchronmaschine (PSM), sein. Der elektromagnetische Wandler kann eine permanenterregte Synchronmaschine, eine Asynchronmaschine, eine Reluktanzmaschine, eine fremderregte Synchronmaschine oder eine Kombination davon sein. Die permanenterregte Synchronmaschine kann mit einem Abtrieb des Getriebes verbunden sein. Das Getriebe kann zwischen der permanenterregten Synchronmaschine und dem Primärantrieb angeordnet sein. Die permanenterregte Synchronmaschine kann mit von dem Primärantrieb erzeugter mechanischer Energie, die insbesondere über das Getriebe zur permanenterregten Synchronmaschine geleitet wird, generatorisch betrieben werden. Die permanenterregte Synchronmaschine kann motorisch betrieben werden, um das Getriebe anzutreiben.

Die permanenterregte Synchronmaschine kann mit einem Antrieb des Getriebes verbunden sein. Die permanenterregte Synchronmaschine kann mit dem Primärantrieb verbunden sein. Die permanenterregte Synchronmaschine kann zwischen dem Primärantrieb und dem Getriebe angeordnet sein. Die permanent rregte Synchronmaschine kann einen Kurbelwellengenerator darstellen.

Die elektrische Maschine kann eine fremderregte Synchronmaschine sein. Die fremderregte Synchronmaschine kann an einem Abtrieb des Getriebes angeordnet sein. Das Getriebe kann zwischen der fremderregten Synchronmaschine und dem Primärantrieb angeordnet sein. Die fremderregte Synchronmaschine kann mit von dem Primärantrieb erzeugter mechanischer Energie, die insbesondere über das Getriebe zur fremderregten Synchronmaschine geleitet wird, generatorisch betrieben werden. Die fremderregte Synchronmaschine kann motorisch betrieben werden, um das Getriebe anzutreiben. Während dem Einbauzustand kann die fremderregte Synchronmaschine mit der Bohlenheizung verbunden sein, um insbesondere die Bohlenheizung mit Energie zu versorgen. Während dem Einbaustopp kann die fremderregte Synchronmaschine von der Bohlenheizung getrennt sein.

Die elektrische Maschine kann eine Asynchronmaschine sein. Die Asynchronmaschine kann an einem Abtrieb des Getriebes angeordnet sein. Das Getriebe kann zwischen der Asynchronmaschine und dem Primärantrieb angeordnet sein. Die Asynchronmaschine kann mit von dem Primärantrieb erzeugter mechanischer Energie, die insbesondere über das Getriebe zur Asynchronmaschine geleitet wird, generatorisch betrieben werden. Die Asynchronmaschine kann motorisch betrieben werden, um das Getriebe anzutreiben.

Die elektrische Maschine kann ein Reluktanzmotor sein. Die elektrische Maschine kann eine Kombination aus Synchronmaschine und Asynchronmaschine sein.

Der wenigstens eine Verbraucher kann eine Pumpe mit variablem oder konstantem Verdrängungsvolumen, einen Fahrantrieb, eine Querverteilungseinrichtung und/oder eine Materialtransporteinrichtung umfassen. Die Pumpe kann mit einem Abtrieb des Getriebes, insbesondere koppelbar bzw. schaltbar, verbunden sein. Der Fahrantrieb, insbesondere eine dem Fahrantrieb zugeordnete Pumpe, kann mit einem Abtrieb des Getriebes, insbesondere koppelbar bzw. schaltbar, verbunden sein. Die Querverteilungseinrichtung, insbesondere eine der Querverteilungseinrichtung zugeordnete Pumpe, kann mit einem Abtrieb des Getriebes, insbesondere koppelbar bzw. schaltbar, verbunden sein. Die Materialtransporteinrichtung, insbesondere eine der Materialtransporteinrichtung zugeordnete Pumpe, kann mit einem Abtrieb des Getriebes, insbesondere koppelbar bzw. schaltbar, verbunden sein. Die Pumpe, der Fahrantrieb, die Querverteilungseinrichtung und/oder die Materialtransporteinrichtung, bzw. deren zugeordneten Pumpen, können an unterschiedlichen Stellen des Getriebes mit dem Getriebe verbunden sein. Die oben genannten Pumpen sind insbesondere Hydraulikpumpen. Die Hydraulikpumpen sind insbesondere dazu ausgebildet, mechanische Energie in hydraulische Energie umzuwandeln.

Hydraulikpumpen und -motoren können ein variables oder konstantes Verdrängungsvolumen aufweisen. Bei einer variablen Pumpe kann der Leistungsfluss zu einem daran angeschlossenen Hydraulikmotor beispielsweise dadurch unterbrochen werden, dass die Pumpe zurückgeschwenkt wird, ohne dass dafür beispielsweise eine mechanische Kupplung notwendig ist.

Durch die koppelbaren bzw. schaltbaren Verbindungen zwischen dem Getriebe und dem oder den Verbraucher/n und/oder durch das Zurückschwenken einer Pumpe mit variablem Verdrängungsvolumen können die entsprechenden Verbraucher vom Primärantrieb bzw. der elektrischen Maschine getrennt werden.

Die Verbindung zwischen der elektrischen Maschine, insbesondere der permanenterregten Synchronmaschine, und dem Getriebe kann koppelbar bzw. schaltbar ausgestaltet sein. Durch die koppelbare bzw. schaltbare Verbindung kann die elektrische Maschine vom Getriebe getrennt werden, um insbesondere in einem Zustand, in dem die elektrische Maschine weder generatorisch noch motorisch betrieben wird und der Primärantrieb läuft, keine Schleppverluste in der elektrischen Maschine zu erzeugen.

Die Verbindung zwischen dem Primärantrieb, insbesondere dem Verbrennungsmotor, und dem Getriebe kann koppelbar bzw. schaltbar ausgestaltet sein. Dadurch kann die Straßenbaumaschine rein elektrisch betrieben werden. Die elektrische Maschine, insbesondere die permanenterregte Synchronmaschine, wird dabei insbesondere motorisch betrieben und treibt das Getriebe an.

Die Straßenbaumaschine kann ein Gleichspannungsnetz/Gleichstromnetz aufweisen. Die Batterie kann im Gleichspannungsnetz angeordnet sein. Die Batterie kann an das Gleichspannungsnetz angeschlossen bzw. damit verbunden sein. Die elektrische Maschine kann an das Gleichspannungsnetz angeschlossen bzw. damit verbunden sein. Die Bohlenheizung kann im Gleichspannungsnetz angeordnet sein. Die Bohlenheizung kann an das Gleichspannungsnetz angeschlossen bzw. damit verbunden sein. Zwischen der Bohlenheizung und dem Gleichspannungsnetz kann ein erster Stromrichter, insbesondere ein erster Wechselrichter, angeordnet sein. Zusätzlich kann zwischen der Bohlenheizung und dem ersten Stromrichter/Wechselrichter ein erster Transformator angeordnet sein. Die Nebenantriebe können im Gleichspannungsnetz angeordnet sein. Die Nebenantriebe können an das Gleichspannungsnetz angeschlossen bzw. damit verbunden sein. Zwischen den Nebenantrieben und dem Gleichspannungsnetz können weitere Stromrichter, insbesondere weitere Wechselrichter, angeordnet sein.

Die Bohlenheizung der Straßenbaumaschine kann mit Energie aus der elektrischen Maschine und/oder der Batterie versorgt werden. Der oder die Nebenantrieb/e der Straßenbaumaschine können mit Energie aus der elektrischen Maschine und/oder der Batterie versorgt werden. Die Nebenantriebe und/oder die Bohlenheizung können seriell geschaltet sein. Die Nebenantriebe und/oder die Bohlenheizung können koppelbar mit der elektrischen Maschine bzw. der Batterie verbunden sein. Die Nebenantriebe und/oder die Bohlenheizung können koppelbar mit dem Gleichspannungsnetz verbunden sein.

Die elektrische Maschine kann dazu ausgebildet sein, insbesondere im generatorischen Betrieb, das Gleichspannungsnetz mit Energie zu versorgen. Die elektrische Maschine kann dazu ausgebildet sein, insbesondere im motorischen Betrieb, mit Energie aus dem Gleichspannungsnetz betrieben zu werden. Das Gleichspannungsnetz kann dazu ausgebildet sein, mit Energie aus der elektrischen Maschine versorgt zu werden und/oder die elektrische Maschine mit Energie zu versorgen. Das Gleichspannungsnetz kann dazu ausgebildet sein, mit Energie aus der Batterie versorgt zu werden und/oder die Batterie mit Energie zu versorgen.

Im generatorischen Betrieb der elektrischen Maschine wird insbesondere Energie von der elektrischen Maschine über das Gleichspannungsnetz in die Batterie geleitet. Im motorischen Betrieb der elektrischen Maschine wird insbesondere Energie von der Batterie zur elektrischen Maschine geleitet.

Die Batterie kann direkt mit dem Gleichspannungsnetz verbunden sein.

Die Straßenbaumaschine kann einen ersten Stromrichter, insbesondere einen ersten Wechselrichter, aufweisen. Der erste Stromrichter/Wechselrichter kann zwischen dem Gleichspannungsnetz, insbesondere der Batterie, und der Bohlenheizung angeordnet sein. Den Ausdruck "dazwischen angeordnet sein" versteht der Fachmann insbesondere so, dass die Komponente mit beiden benachbarten Komponenten verbunden (direkt oder indirekt) ist. Demzufolge ist der erste Stromrichter/Wechselrichter sowohl mit dem Gleichspannungsnetz bzw. der Batterie verbunden, als auch mit der Bohlenheizung. Die Straßenbaumaschine kann einen ersten Transformator aufweisen. Der erste Transformator kann zwischen dem ersten Stromrichter/Wechselrichter und der Bohlenheizung angeordnet sein.

Die Straßenbaumaschine kann einen ersten Nebenantrieb aufweisen, der insbesondere im Gleichspannungsnetz angeordnet ist bzw. mit diesem verbunden ist. Die Straßenbaumaschine kann einen zweiten Stromrichter, insbesondere einen zweiten Wechselrichter, aufweisen. Der zweite Stromrichter/Wechselrichter kann zwischen dem Gleichspannungsnetz, insbesondere der Batterie, und dem ersten Nebenantrieb angeordnet sein. Der erste Nebenantrieb kann mit Energie aus der Batterie und/oder der elektrischen Maschine versorgt werden.

Die Straßenbaumaschine kann einen zweiten Nebenantrieb aufweisen, der insbesondere im Gleichspannungsnetz angeordnet ist bzw. mit diesem verbunden ist. Die Straßenbaumaschine kann einen dritten Stromrichter, insbesondere einen dritten Wechselrichter, aufweisen. Der dritte Stromrichter/Wechselrichter kann zwischen dem Gleichspannungsnetz, insbesondere der Batterie, und dem zweiten Nebenantrieb angeordnet sein. Der zweite Nebenantrieb kann mit Energie aus der Batterie und/oder der elektrischen Maschine versorgt werden.

Die Straßenbaumaschine kann einen dritten Nebenantrieb aufweisen, der insbesondere im Gleichspannungsnetz angeordnet ist bzw. mit diesem verbunden ist. Die Straßenbaumaschine kann einen vierten Stromrichter, insbesondere einen vierten Wechselrichter, aufweisen. Der vierte Stromrichter/Wechselrichter kann zwischen dem Gleichspannungsnetz, insbesondere der Batterie, und dem dritten Nebenantrieb angeordnet sein. Der dritte Nebenantrieb kann mit Energie aus der Batterie und/oder der elektrischen Maschine versorgt werden.

Der erste Nebenantrieb, der zweite Nebenantrieb und/oder der dritte Nebenantrieb sind insbesondere parallel geschaltet.

Der Fachmann versteht, dass die Straßenbaumaschine weitere Nebenantriebe und dementsprechend weitere zugehörige Stromrichter, insbesondere Wechselrichter, aufweisen kann. Beispielsweise kann die Straßenbaumaschine auch vier, fünf, sechs, oder mehr Nebenantriebe aufweisen. Die Nebenantriebe sind insbesondere parallel geschaltet. Die Nebenantriebe können mit Energie aus der Batterie und/oder der elektrischen Maschine versorgt werden.

Die Straßenbaumaschine kann einen ersten Gleichrichter aufweisen. Der erste Gleichrichter kann zwischen einem Wechselspannungsnetz, beispielsweise einem öffentlichen Stromnetz, und dem Gleichspannungsnetz, insbesondere der Batterie, angeordnet sein. Die Batterie kann mit Energie aus dem Gleichspannungsnetz versorgt bzw. geladen werden. Die elektrische Maschine kann mit Energie aus dem Gleichspannungsnetz versorgt bzw. betrieben werden. Die Straßenbaumaschine kann dazu ausgebildet sein, mit dem Wechselspannungsnetz verbunden zu werden.

Die Straßenbaumaschine kann dazu ausgebildet sein, mit einer Ladestation, insbesondere einer Gleichspannungsladestation, verbunden zu werden. Die Ladestation ist insbesondere mit dem Gleichspannungsnetz verbunden. Die Batterie kann mit Energie aus dem Gleichspannungsnetz geladen werden.

Die Straßenbaumaschine kann einen bidirektionalen Stromrichter aufweisen. Der bidirektionale Stromrichter kann zwischen dem Gleichspannungsnetz, insbesondere der Batterie, der Bohlenheizung, den Nebenantrieben, dem Wechselspannungsnetz und/oder der Ladestation, und der elektrischen Maschine angeordnet sein.

Der bidirektionale Stromrichter kann dazu ausgebildet sein, insbesondere im motorischen Betrieb der elektrischen Maschine, Gleichstrom in Wechselstrom umzuwandeln. Im motorischen Betrieb der elektrischen Maschine wird der bidirektionale Stromrichter insbesondere mit Gleichstrom aus dem Gleichspannungsnetz, insbesondere der Batterie, versorgt und wandelt diesen in Wechselstrom um, sodass die elektrische Maschine mit dem umgewandelten Wechselstrom betrieben werden kann.

Der bidirektionale Stromrichter kann dazu ausgebildet sein, insbesondere im generatorischen Betrieb der elektrischen Maschine, Wechselstrom in Gleichstrom umzuwandeln. Im generatorischen Betrieb der elektrischen Maschine wird der bidirektionale Stromrichter insbesondere mit Wechselstrom von der elektrischen Maschine versorgt und wandelt diesen in Gleichstrom um, sodass die Batterie, die Bohlenheizung und/oder die Nebenantriebe damit versorgt werden können. Anstelle des bidirektionalen Stromrichters können auch zwei separate Stromrichter, insbesondere ein Gleichrichter und ein Wechselrichter, vorgesehen sein.

Das Gleichspannungsnetz kann zwischen der elektrischen Maschine und der Batterie angeordnet sein. Das Gleichspannungsnetz kann zwischen dem bidirektionalen Stromrichter und der Batterie angeordnet sein. Das Gleichspannungsnetz kann zwischen der elektrischen Maschine bzw. dem bidirektionalen Stromrichter und dem Wechselstromnetz angeordnet sein. Das Gleichspannungsnetz kann zwischen der elektrischen Maschine bzw. dem bidirektionalen Stromrichter und der Ladestation angeordnet sein. Das Gleichspannungsnetz kann zwischen der Batterie und der Bohlenheizung angeordnet sein. Das Gleichspannungsnetz kann zwischen der Batterie und dem einen oder mehreren Nebenantrieben angeordnet sein. Das Gleichspannungsnetz kann die elektrische Maschine bzw. den bidirektionalen Stromrichter mit der Batterie, der Bohlenheizung und/oder den Nebenantrieben verbinden. Das Gleichspannungsnetz kann die Batterie mit der elektrischen Maschine bzw. dem bidirektionalen Stromrichter, der Bohlenheizung und/oder den Nebenantrieben verbinden.

Wie oben ausgeführt, kann der erste Transformator zwischen dem Gleichspannungsnetz, insbesondere der Batterie bzw. dem ersten Wechselrichter, und der Bohlenheizung angeordnet sein. Das Gleichspannungsnetz bzw. der bidirektionale Stromrichter ist in diesem Fall insbesondere zwischen der Bohlenheizung und der elektrischen Maschine anordnet. Die Bohlenheizung wird dann insbesondere über das Gleichspannungsnetz mit Energie versorgt. Alternativ dazu kann die Bohlenheizung zwischen der elektrischen Maschine, insbesondere der fremderregten Synchronmaschine, und dem Gleichspannungsnetz bzw. dem bidirektionalen Stromrichter angeordnet sein. Die Bohlenheizung kann insbesondere direkt mit der elektrischen Maschine, insbesondere koppelbar, verbunden sein. Die Bohlenheizung kann dann insbesondere direkt mit Energie, insbesondere Wechselstrom, aus der elektrischen Maschine versorgt werden, insbesondere, wenn sich die elektrische Maschine im generatorischen Betrieb befindet. Der erste Transformator kann in diesem Fall zwischen der elektrischen Maschine bzw. der Bohlenheizung und dem bidirektionalen Stromrichter angeordnet sein. Die Verbindung zwischen der Bohlenheizung und dem ersten Transformator kann insbesondere koppelbar ausgebildet sein. Die Verbindung zwischen der elektrischen Maschine und dem ersten Transformator kann insbesondere koppelbar ausgebildet sein. Die Verbindung zwischen der elektrischen Maschine und der Bohlenheizung kann insbesondere koppelbar ausgebildet sein. Im Einbaustopp kann die elektrische Maschine dann von der Bohlenheizung bzw. dem Gleichspannungsnetz getrennt werden. Die Bohlenheizung kann eine Wechselstromheizung oder eine Gleichstromheizung sein.

Die Straßenbaumaschine kann ein Kühlsystem aufweisen. Das Kühlsystem ist dazu ausgebildet, die elektrische Maschine zu kühlen.

Die Batterie, die elektrische Maschine und/oder das Kühlsystem können vollintergiert in der Straßenbaumaschine ausgebildet bzw. in dieser verbaut sein. Die Batterie und/oder das Kühlsystem können als Modul ausgebildet sein. Das Modul kann koppelbar mit bzw. auf der Straßenbaumaschine angebracht sein. Auch bei dem Modulkonzept kann die elektrische Maschine in der Straßenbaumaschine integriert ausgebildet bzw. in dieser verbaut sein.

Die Straßenbaumaschine kann ein zweites Getriebe, insbesondere ein zweites Verteilergetriebe bzw. zweites Pumpenverteilergetriebe, aufweisen. Die Straßenbaumaschine kann eine zweite elektrische Maschine, insbesondere einen Motor aufweisen. Die zweite elektrische Maschine kann mit der Batterie und/oder der ersten elektrischen Maschine verbunden sein. Die zweite elektrische Maschine kann dazu ausgebildet sein, das zweite Getriebe anzutreiben. Das zweite Getriebe kann mit weiteren Verbrauchern verbunden sein. Beispielsweise kann das erste Getriebe mit einer Pumpe, insbesondere einer hydraulischen Pumpe, verbunden sein. Das erste Getriebe kann dazu ausgebildet sein, die Pumpe anzutreiben. Das zweite Getriebe kann mit einem Fahrantrieb der Straßenbaumaschine verbunden sein. Das zweite Getriebe kann dazu ausgebildet sein, den Fahrantrieb der Straßenbaumaschine anzutreiben.

Gemäß einem zweiten Aspekt der Erfindung umfasst ein Verfahren zum Betrieb einer Straßenbaumaschine wenigstens einen ersten Schritt und einen zweiten Schritt. Die Straßenbaumaschine umfasst wenigstens einen Primärantrieb, wenigstens eine elektrische Maschine und wenigstens ein Getriebe. In dem ersten Schritt wird das Getriebe durch den Primärantrieb angetrieben. Die elektrische Maschine kann im ersten Schritt über das Getriebe generatorisch betrieben werden. In dem zweiten Schritt wird das Getriebe durch die elektrische Maschine angetrieben. Die elektrische Maschine wird im zweiten Schritt motorisch betrieben. Der erste und der zweite Schritt müssen nicht chronologisch erfolgen. Der erste Schritt kann vor dem zweiten Schritt erfolgen. Der erste Schritt kann nach dem zweiten Schritt erfolgen.

Die Straßenbaumaschine ist insbesondere wie die Straßenbaumaschine gemäß dem ersten Aspekt der Erfindung ausgestaltet. Die Straßenbaumaschine ist insbesondere ein Straßenfertiger oder ein Beschickerfahrzeug für einen Straßenfertiger. In dem zweiten Schritt kann der Primärantrieb von dem Getriebe entkoppelt sein.

Im generatorischen Betrieb der elektrischen Maschine, insbesondere im ersten Schritt, kann die Batterie der Straßenbaumaschine aufgeladen werden. Die Batterie wird insbesondere mit von der elektrischen Maschine erzeugten Energie aufgeladen. Im motorischen Betrieb der elektrischen Maschine, insbesondere im zweiten Schritt, wird die elektrische Maschine mit Energie aus der Batterie betrieben. Die im generatorischen Betrieb in der Batterie gespeicherte Energie wird im motorischen Betrieb genutzt, um die elektrische Maschine anzutreiben.

Alternativ oder zusätzlich kann die Batterie über eine Ladestation, insbesondere eine Gleichspannungsladestation, geladen werden. Alternativ oder zusätzlich kann die Batterie über ein Wechselspannungsnetz, insbesondere das öffentliche Stromnetz, geladen werden, wobei der Wechselstrom aus dem Wechselspannungsnetz zunächst mit einem Gleichrichter in Gleichstrom umgewandelt wird.

Der Primärantrieb kann das Getriebe auch im zweiten Schritt, also im motorischen Betrieb der elektrischen Maschine, antreiben. Das Getriebe wird im zweiten Schritt insbesondere von dem Primärantrieb und der elektrischen Maschine angetrieben. Der motorische Betrieb der elektrischen Maschine wird insbesondere verwendet, um Belastungsspitzen auszugleichen. Dadurch kann der Primärantrieb kleiner dimensioniert werden.

Im generatorischen Betrieb der elektrischen Maschine bzw. im ersten Schritt kann der bidirektionale Stromrichter als Gleichrichter verwendet werden. Der bidirektionale Stromrichter bzw. ein separater Gleichrichter wandelt im ersten Schritt insbesondere Wechselstrom (von der elektrischen Maschine) in Gleichstrom (für das Gleichspannungsnetz bzw. die Batterie) um.

Im motorischen Betrieb der elektrischen Maschine bzw. im zweiten Schritt kann der bidirektionale Stromrichter als Wechselrichter verwendet werden. Der bidirektionale Stromrichter bzw. ein separater Wechselrichter wandelt im zweiten Schritt insbesondere Gleichstrom (von der Batterie bzw. dem Gleichspannungsnetz) in Wechselstrom (für die elektrische Maschine) um.

Die Straßenbaumaschine kann einen Verbraucher, insbesondere die oben beschriebene Bohlenheizung, aufweisen. Während einem Einbauzustand der Straßenbaumaschine kann der Verbraucher mit der elektrischen Maschine verbunden sein und mit Energie aus der elektrischen Maschine versorgt werden. Während einem Einbaustopp der Straßenbaumaschine kann der Verbraucher von der elektrischen Maschine getrennt sein und mit Energie aus der Batterie bzw. dem Gleichspannungsnetz versorgt werden.

Das Verfahren kann des Weiteren das Versorgen eines ersten Nebenantriebs, insbesondere über ein Gleichspannungsnetz, mit Energie umfassen. Das Verfahren kann des Weiteren das Versorgen eines zweiten Nebenantriebs, insbesondere über ein Gleichspannungsnetz, mit Energie umfassen. Das Verfahren kann des Weiteren das Versorgen eines dritten Nebenantriebs, insbesondere über ein Gleichspannungsnetz, mit Energie umfassen. Der Fachmann versteht, dass weitere Nebenantriebe ebenfalls versorgt werden können.

Im generatorischen Betrieb der elektrischen Maschine bzw. im ersten Schritt kann der erste, zweite und/oder dritte Nebenantrieb (bzw. auch die weiteren Nebenantriebe) mit Energie aus der elektrischen Maschine und/oder der Batterie versorgt werden. Im motorischen Betrieb der elektrischen Maschine bzw. im zweiten Schritt kann der erste, zweite und/oder dritte Nebenantrieb (bzw. auch die weiteren Nebenantriebe) mit Energie aus der Batterie versorgt werden.

Das Verfahren kann zusätzlich das Umwandeln von Gleichspannung des Gleichspannungsnetzes bzw. der Batterie in Wechselspannung umfassen, sodass die Nebenantriebe und/oder die Bohlenheizung mit Wechselspannung betrieben werden können.

In einem dritten Schritt kann das Getriebe durch den Primärantrieb angetrieben werden und die elektrische Maschine vom Getriebe entkoppelt sein. Dadurch können insbesondere Schleppverluste vermieden werden. Der erste, zweite und/oder dritte Schritt können in beliebiger Reihenfolge erfolgen. Zwischen dem ersten, zweiten und/oder dritten Schritt können zusätzlich weitere Schritte erfolgen.

Ein dritter Aspekt der Erfindung umfasst die Verwendung eines parallelen Hybridantriebs, umfassend einen Verbrennungsmotor und eine elektrische Maschine, in einer Straßenbaumaschine. Die Straßenbaumaschine ist insbesondere eine Straßenfertiger. Die Straßenbaumaschine kann gemäß dem ersten Aspekt der Erfindung ausgestaltet sein. Die elektrische Maschine ist insbesondere dazu ausgebildet, motorisch und generatorisch betrieben zu werden.

Die Straßenbaumaschine gemäß dem ersten Aspekt der Erfindung kann mit Verfahrensschritten des Verfahrens gemäß dem zweiten Aspekt der Erfindung verwendet werden. Das Verfahren gemäß dem zweiten Aspekt der Erfindung kann mit einer Straßenbaumaschine gemäß dem ersten Aspekt der Erfindung durchgeführt werden. Die Straßenbaumaschine gemäß dem ersten Aspekt der Erfindung kann gemäß der Verwendung des dritten Aspekts der Erfindung verwendet werden.

Wie in der Beschreibung der verschiedenen beschriebenen Ausführungsformen und den beigefügten Ansprüchen verwendet, sind die Singularformen so zu verstehen, dass sie auch die Pluralformen enthalten und umgekehrt, es sei denn, aus dem Kontext geht eindeutig etwas Anderes hervor.

Die Ausdrücke "erstes", "zweites", "drittes" und "viertes" sind lediglich als Bezeichnungen für ein bestimmtes Element oder eine bestimmte Komponente zu verstehen und müssen nicht unbedingt eine bestimmte Reihenfolge oder Anordnung der genannten Komponenten oder Elemente angeben. So impliziert beispielsweise das Vorhandensein eines vierten Elements nicht zwangsläufig das Vorhandensein eines ersten, zweiten oder dritten Elements und umgekehrt.

Im Folgenden werden vorteilhafte Ausführungsformen der Erfindung anhand der beigefügten Figuren näher erläutert.
Fig. 1 zeigt eine Seitenansicht einer erfindungsgemäßen Straßenbaumaschine in Form eines Straßenfertigers.
Fig. 2 zeigt eine schematische Darstellung eines aus dem Stand der Technik bekannten Antriebssystems.
Fig. 3 zeigt eine schematische Darstellung einer ersten Ausführungsform eines Antriebssystems einer erfindungsgemäßen Straßenbaumaschine.
Fig. 4 zeigt eine schematische Darstellung einer zweiten Ausführungsform eines Antriebssystems einer erfindungsgemäßen Straßenbaumaschine.
Fig. 5 zeigt eine schematische Darstellung einer dritten Ausführungsform eines Antriebssystems einer erfindungsgemäßen Straßenbaumaschine.
Fig. 6 zeigt eine schematische Darstellung einer weiteren Ausführungsform eines Antriebssystems einer erfindungsgemäßen Straßenbaumaschine.

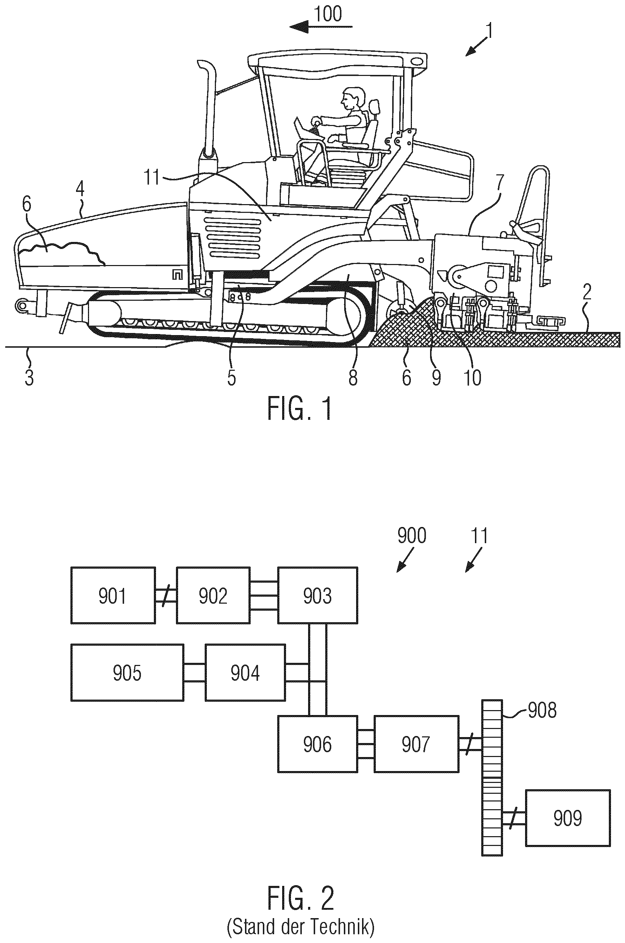

Fig. 1 zeigt eine Seitenansicht einer erfindungsgemäßen Straßenbaumaschine 1 in Form eines Straßenfertigers. Der Straßenfertiger 1 ist dazu ausgebildet, eine Einbauschicht 2 auf einem Untergrund 3 herzustellen. Der Straßenfertiger 1 weist in Einbau-Fahrtrichtung 100 vorne einen Gutbunker 4 auf, aus welchem entgegen der Einbau-Fahrtrichtung 100 des Straßenfertigers 1 mittels einer Materialtransporteinrichtung 5 ein darin aufgenommenes Einbaumaterial 6 zu einer Einbaubohle 7 des Straßenfertigers 1 transportiert wird. Die Materialtransporteinrichtung 5 ist innerhalb eines Chassis 8 des Straßenfertigers 1 angeordnet und transportiert das Einbaumaterial 6 zunächst zu einer in Einbau-Fahrtrichtung 100 vor der Einbaubohle 7 angeordneten Querverteilungseinrichtung 9. Die Querverteilungseinrichtung 9 ist dazu ausgebildet, das Einbaumaterial 6 vor der Einbaubohle 7 entlang einer Querrichtung quer zur Einbau-Fahrtrichtung 100 zu verteilen. Der Straßenfertiger 1 kann eine Bohlenheizung 10 aufweisen, die dazu ausgebildet ist, die Einbaubohle 7, insbesondere auf eine vorbestimmte Temperatur, zu erhitzen. Zudem weist der Straßenfertiger ein Antriebssystem 11 auf.

Ein aus dem Stand der Technik bekanntes Antriebssystem 11 in Form eines seriellen Hybridantriebs 900 ist schematisch in Fig. 2 dargestellt. Der serielle Hybridantrieb weist einen Primärantrieb 901 in Form eines Verbrennungsmotors auf. Der Verbrennungsmotor 901 betreibt einen Generator 902. Die vom Generator 902 erzeugte Wechselspannung wird in einem Gleichrichter 903 in Gleichspannung umgewandelt. Der Gleichrichter 903 ist über einen Gleichspannungswandler 904 mit einer Batterie 905 verbunden. Der serielle Hybridantrieb 900 weist zudem einen Wechselrichter 906 und einen elektrischen Motor 907 auf. Der Wechselrichter 906 wandelt die von dem Gleichrichter 903 oder der Batterie 905 bereitgestellte Gleichspannung in Wechselspannung um, sodass der elektrische Motor 907 damit betrieben werden kann. Der elektrische Motor 907 ist mit einem Getriebe 908 verbunden und treibt dieses an. An einem Abtrieb des Getriebes 908 ist ein Verbraucher 909, beispielsweise in Form einer Hydraulikpumpe, angeordnet, welcher vom Getriebe 908 angetrieben wird. In dem in Fig. 2 dargestellten seriellen Hybridantrieb wird zunächst mechanische Energie durch den Verbrennungsmotor 901 erzeugt. Diese wird anschließend zunächst durch den Generator 902 in elektrische Energie umgewandelt. Anschließend wird die elektrische Energie durch den elektrischen Motor 907 wieder in mechanische Energie umgewandelt und über das Getriebe 908 zur Hydraulikpumpe 909 geleitet. In der Hydraulikpumpe 909 wird die mechanische Energie in hydraulische Energie umgewandelt, welche anschließend in Hauptverbrauchern, beispielsweise einem Fahrantrieb oder einem Materialtransport des Straßenfertigers 1, in mechanische Energie umgewandelt wird.

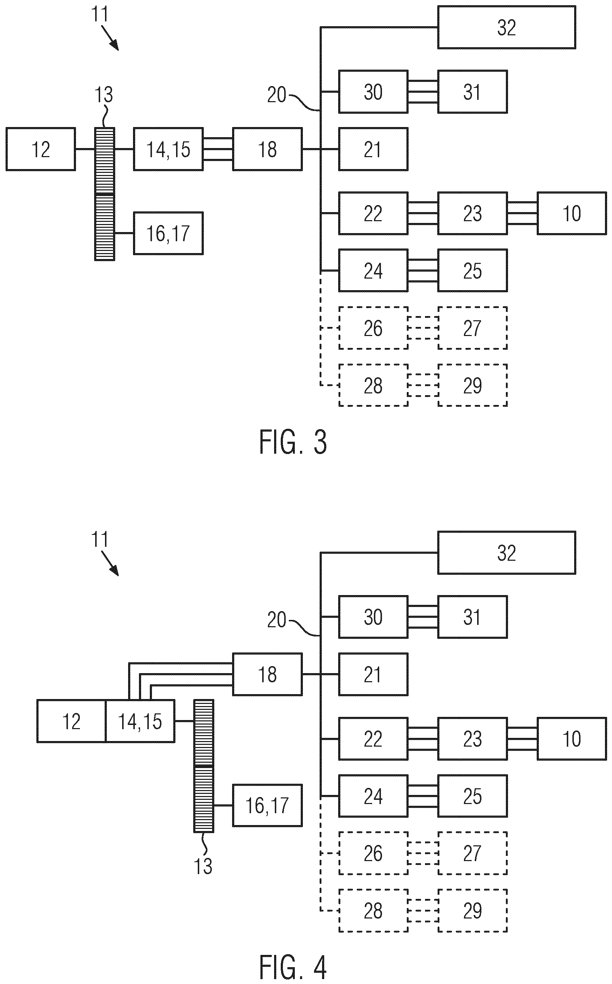

Fig. 3 zeigt eine erste Ausführungsform eines Antriebssystems 11 einer erfindungsgemäßen Straßenbaumaschine 1. Das Antriebssystem 11 umfasst einen Primärantrieb 12 in Form eines Verbrennungsmotors, beispielsweise eines Diesel- oder Benzinmotors. Der Primärantrieb 12 ist mit einem Getriebe 13 verbunden, insbesondere damit trennbar gekoppelt, und dazu ausgebildet, das Getriebe 13 anzutreiben. Das Getriebe 13 kann ein Pumpenverteilergetriebe 13 sein. An einem Abtrieb des Getriebes 13 ist eine elektrische Maschine 14, insbesondere in Form einer permanenterregten Synchronmaschine (PSM) 15, angeordnet. Die elektrische Maschine 14 ist mit dem Getriebe 13 trennbar gekoppelt. Des Weiteren ist wenigstens ein Verbraucher 16, insbesondere in Form einer Hydraulikpumpe 17, mit dem Getriebe 13 verbunden und wird über das Getriebe 13 angetrieben. Der wenigstens eine Verbraucher 16 kann beispielsweise einem Fahrantrieb oder einem Materialtransport zugeordnet bzw. davon umfasst sein.

Die elektrische Maschine 14 ist dazu ausgelegt, generatorisch und motorisch betrieben zu werden. Im generatorischen Betrieb wird in der elektrischen Maschine 14 Wechselstrom erzeugt, insbesondere aus mechanischer Energie, die vom Primärantrieb 12 über das Getriebe 13 zur elektrischen Maschine 14 geleitet wird.

Im Vergleich zu im Stand der Technik bekannten seriellen Antriebssystemen für Straßenbaumaschinen 1, wie in Fig. 2 dargestellt, wird bei dem erfindungsgemäßen Antriebssystem 11 die durch den Primärantrieb 12 erzeugte mechanische Energie nicht zuvor in elektrische Energie umgewandelt, sondern direkt dem Getriebe 13 zugeführt.

Das Antriebssystem 11 umfasst einen Stromrichter 18, insbesondere in Form eines bidirektionalen Stromrichters. Alternativ kann der Stromrichter 18 aus zwei separaten Wechsel- und Gleichrichtern gebildet sein. Im generatorischen Betrieb der elektrischen Maschine 14 wandelt der bidirektionale Stromrichter von der elektrischen Maschine 14 erzeugte Wechselspannung in Gleichspannung um. An den bidirektionalen Stromrichter 18 ist ein Gleichspannungsnetz 20 angeschlossen. Das Gleichspannungsnetz 20 verbindet der den bidirektionalen Stromrichter 18 mit einer von dem Straßenfertiger 1 umfassten Batterie 21 verbindet. Im generatorischen Betrieb der elektrischen Maschine 14 kann die Batterie 21 mit Energie aus der elektrischen Maschine 14 geladen werden.

An das Gleichspannungsnetz 20 kann ein erster Stromrichter 22 in Form eines ersten Wechselrichters angeschlossen sein. Der erste Wechselrichter 22 ist über einen ersten Transformator 23 mit der Bohlenheizung 10 des Straßenfertigers 1 verbunden. Der erste Wechselrichter 22 wandelt die im Gleichspannungsnetz 20 vorliegende Gleichspannung in Wechselspannung um. Der ersten Transformator 23 passt die vorliegende Wechselspannung an die von der Bohlenheizung 10 benötigte Wechselspannung an.

An das Gleichspannungsnetz 20 kann ein zweiter Stromrichter 24 in Form eines zweiten Wechselrichters angeschlossen sein. Der zweite Wechselrichter 24 ist mit einem ersten Nebenantrieb 25 des Straßenfertigers 1 verbunden. Der zweite Wechselrichter 24 wandelt die im Gleichspannungsnetz 20 vorliegende Gleichspannung in Wechselspannung um und leitet diese zum ersten Nebenantrieb 25. Der Fachmann versteht, dass die Straßenbaumaschine 1 weitere Nebenantriebe umfassen kann. Exemplarisch sind in Fig. 3 zwei weitere Nebenantriebe dargestellt, wie nachfolgend beschrieben.

An das Gleichspannungsnetz 20 kann ein dritter Stromrichter 26 in Form eines dritten Wechselrichters angeschlossen sein. Der dritte Wechselrichter 26 ist mit einem zweiten Nebenantrieb 27 des Straßenfertigers 1 verbunden. Der dritte Wechselrichter 26 wandelt die im Gleichspannungsnetz 20 vorliegende Gleichspannung in Wechselspannung um und leitet diese zum zweiten Nebenantrieb 27.

An das Gleichspannungsnetz 20 kann ein vierter Stromrichter 28 in Form eines vierten Wechselrichters angeschlossen sein. Der vierte Wechselrichter 28 ist mit einem dritten Nebenantrieb 29 des Straßenfertigers 1 verbunden. Der vierte Wechselrichter 28 wandelt die im Gleichspannungsnetz 20 vorliegende Gleichspannung in Wechselspannung um und leitet diese zum dritten Nebenantrieb 29. Der Fachmann versteht, dass die Straßenbaumaschine 1 auch noch weitere Nebenantriebe aufweisen kann. Je nach benötigter Spannungsart kann die Straßenbaumaschine 1 auch weitere Stromrichter in Form von Wechselrichtern aufweisen.

Die Bohlenheizung 10 und/oder einer oder mehrere der Nebenantriebe 25, 27, 29 können mit Energie aus der Batterie 21 betrieben werden.

Der Straßenfertiger 1 kann zudem einen Gleichrichter 30 aufweisen. Der Gleichrichter 30 ist dazu ausgebildet, Wechselspannung eines Wechselspannungsnetzes 31, insbesondere des öffentlichen Stromnetzes, in Gleichspannung umzuwandeln. Die Batterie 21 kann dann mit Energie aus dem Wechselspannungsnetz 31 geladen werden. Die Bohlenheizung 10 und/oder einer oder mehrere der Nebenantriebe 25, 27, 29 können mit Energie aus dem Wechselspannungsnetz 31 betrieben werden.

Der Straßenfertiger 1, insbesondere das Gleichspannungsnetz 20, kann dazu ausgebildet sein, mit einer Ladestation 32 in Form einer Gleichstrom-Ladestation verbunden zu werden. Die Batterie 21 kann dann mit Energie aus der Ladestation 32 geladen werden. Die Bohlenheizung 10 und/oder einer oder mehrere der Nebenantriebe 25, 27, 29 können mit Energie aus dem der Ladestation 32 betrieben werden.

Die Nebenantriebe 25, 27, 29 sind insbesondere elektrische Nebenantriebe. Die Bohlenheizung 10 und die Nebenantriebe 25, 27, 29 sind parallelgeschaltet.

Im motorischen Betrieb der elektrischen Maschine 14, insbesondere der permanenterregten Synchronmaschine 15, wird die elektrische Maschine 14 mit Energie aus der Batterie 21, dem Wechselstromnetz 31 und/oder der Ladestation 32 betrieben. Die elektrische Maschine 14 treibt das Getriebe 13, insbesondere das Pumpenverteilergetriebe, an. Dies kann zusätzlich oder alternativ zum Antrieb durch den Primärantrieb 12 erfolgen.

Fig. 4 zeigt eine zweite Ausführungsform eines Antriebssystems 11 einer erfindungsgemäßen Straßenbaumaschine 1. Das Gleichspannungsnetz 20 kann identisch wie in der Ausführungsform der Fig. 3 ausgebildet sein. Das Getriebe 13, der bidirektionale Stromrichter 18, das Gleichspannungsnetz 20, die Batterie 21, der erste Stromrichter 22, der erste Transformator 23, die Bohlenheizung 10, der zweite Stromrichter 24, der erste Nebenantrieb 25, der dritte Stromrichter 26, der zweite Nebenantrieb 27, der vierte Stromrichter 28, der dritte Nebenantrieb 29, der Gleichrichter 30, das Wechselspannungsnetz 31 und/oder die Ladestation 32 (sowie Kombination davon) können identisch wie in der Ausführungsform der Fig. 3 ausgebildet und angeordnet sein.

Im Gegensatz zu der Ausführungsform der Fig. 3 sind bei der Ausführungsform der Fig. 4 der Primärantrieb 12 und die elektrische Maschine 14 nicht an unterschiedlichen Stellen mit dem Getriebe 13 verbunden. Anstatt die elektrische Maschine 14 an einem Abtrieb des Getriebes 13 anzuordnen, wie in Fig. 3, ist die elektrische Maschine 14 zwischen dem Primärantrieb 12 und dem Getriebe 13 angeordnet. Die elektrische Maschine 14 stellt insbesondere einen Kurbelwellengenerator dar. Diese Ausführung kann Bauraumvorteile mit sich bringen. Der Primärantrieb 12 kann, wie in Fig. 3, ein Verbrennungsmotor 12 sein. Die elektrische Maschine 14 kann, wie in Fig. 3, eine permanenterregte Synchronmaschine 15 sein. Die elektrische Maschine 14 kann in dieser Ausführungsform ebenfalls motorisch und generatorisch betrieben werden.

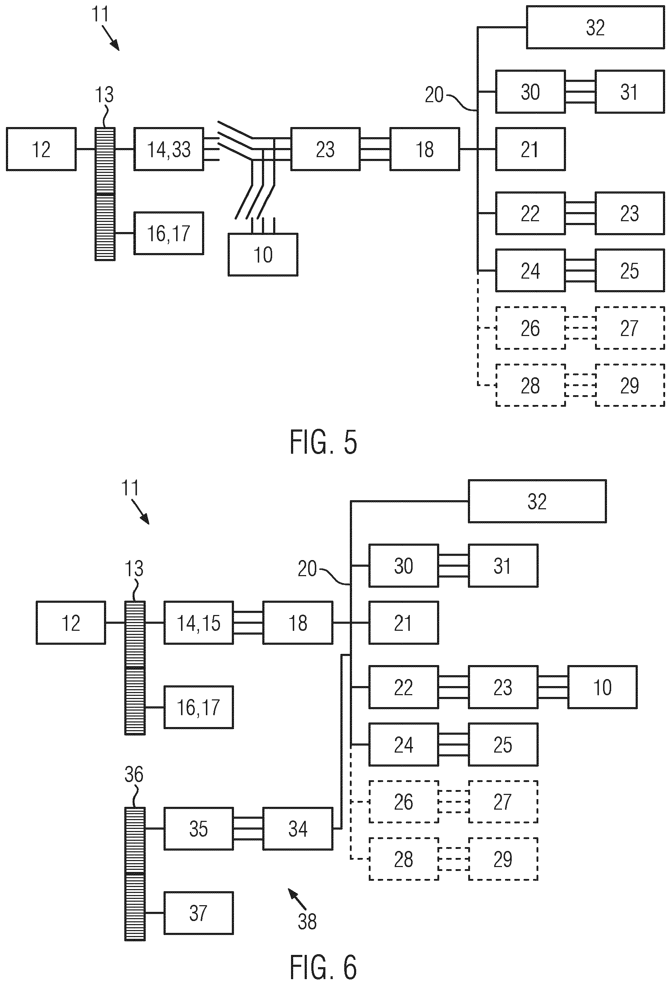

Der eine oder mehrere Verbraucher 16, insbesondere die eine oder mehrere Hydraulikpumpen 17, können identische wie in der Ausführungsform der Fig. 3 ausgebildet sein. Fig. 5 zeigt eine dritte Ausführungsform eines Antriebssystems 11 einer erfindungsgemäßen Straßenbaumaschine 1. Das Gleichspannungsnetz 20 kann identisch wie in der Ausführungsform der Fig. 3 ausgebildet sein. Das Getriebe 13, der bidirektionale Stromrichter 18, das Gleichspannungsnetz 20, die Batterie 21, der zweite Stromrichter 24, der erste Nebenantrieb 25, der dritte Stromrichter 26, der zweite Nebenantrieb 27, der vierte Stromrichter 28, der dritte Nebenantrieb 29, der Gleichrichter 30, das Wechselspannungsnetz 31 und/oder die Ladestation 32 (sowie Kombination davon) können identisch wie in der Ausführungsform der Fig. 3 ausgebildet und angeordnet sein. Der eine oder mehrere Verbraucher 16, insbesondere die eine oder mehrere Hydraulikpumpen 17, können identisch wie in der Ausführungsform der Fig. 3 ausgebildet sein. Der Primärantrieb 12 kann, wie in Fig. 3, ein Verbrennungsmotor 12 sein.

Im Gegensatz zu den Ausführungsformen der Fig. 3 und 4 ist die elektrische Maschine 14 eine fremderregte Synchronmaschine (FSM) 33. Die fremderregte Synchronmaschine 33 ist an einem Abtrieb des Getriebes 13 angeordnet und mit dem Getriebe 13 verbunden. Der erste Transformator 23 ist zwischen dem bidirektionalen Stromrichter 18 und der elektrischen Maschine 14 angeordnet. Die Bohlenheizung 10 ist direkt mit der elektrischen Maschine 14 verbunden. Die Bohlenheizung 10 ist insbesondere koppelbar mit der elektrischen Maschine 14 verbunden, sodass diese von der elektrischen Maschine 14 getrennt werden kann. Der erste Transformator 23 ist insbesondere koppelbar mit der elektrischen Maschine 14 verbunden, sodass dieser und somit das Gleichspannungsnetz 20 von der elektrischen Maschine 14 getrennt werden kann. Die Bohlenheizung 10 ist ebenfalls koppelbar mit dem erster Transformator 23 koppelbar verbunden.

In einem Einbaustopp des Straßenfertigers 1 kann die elektrische Maschine 14 von dem ersten Transformator 23 und somit dem bidirektionalen Stromrichter 18 getrennt werden. Die Bohlenheizung 10 ist dann mit dem bidirektionalen Stromrichter 18 über den ersten Transformator 23 verbunden. Die Bohlenheizung 10 wird somit aus der Batterie 21 mit Energie versorgt.

Die elektrische Maschine 14, insbesondere die fremderregte Synchronmaschine 33, kann in dieser Ausführungsform ebenfalls generatorisch und motorisch betrieben werden. Die elektrische Maschine 14, insbesondere die fremderregte Synchronmaschine 33, kann jedoch nicht motorisch betrieben werden, wenn zeitgleich die Bohlenheizung 10 aktiv ist.

Fig. 6 zeigt eine weitere Ausführungsform eines Antriebssystems 11 einer erfindungsgemäßen Straßenbaumaschine 1 und stellt einer Erweiterung der in den Fig. 3 bis 5 gezeigten Ausführungsformen dar. Exemplarisch ist die Erweiterung aufbauend auf die in Fig. 3 gezeigten Ausführungsform dargestellt. Der Fachmann versteht jedoch, dass dies analog dazu auch für die Ausführungsformen der Fig. 4 und 5 möglich ist.

Das Antriebssystem weist einen fünften Wechselrichter 34 auf, der mit dem Gleichspannungsnetz 20 verbunden ist. Der fünfte Wechselrichter 34 wandelt die im Gleichspannungsnetz 20 vorliegende Gleichspannung in Wechselspannung um. Mit dem fünften Wechselrichter 34 ist ein elektrischer Motor 35 verbunden, insbesondere koppelbar verbunden. Der elektrische Motor 35 wird mit Energie aus der elektrischen Maschine 14 und/oder der Batterie 21, insbesondere über das Gleichspannungsnetz 20, versorgt. Alternativ oder zusätzlich wird der elektrische Motor 35 mit Energie aus der Ladestation 32 und oder dem Wechselspannungsnetz 31, insbesondere über das Gleichspannungsnetz 20, versorgt. Der elektrische Motor 35 treibt ein zweites Getriebe 36 an. Das zweite Getriebe 36 kann ein Pumpenverteilergetriebe sein. Das zweite Getriebe 36 kann identisch zum Getriebe 13 ausgebildet sein. Das zweite Getriebe 36 kann anders als das Getriebe 13 ausgebildet sein. An einem Abtrieb des zweiten Getriebes 36 ist wenigstens ein weiterer Verbraucher 37 angeordnet. Der wenigstens eine weitere Verbraucher 37 kann koppelbar mit dem zweiten Getriebe 36 verbunden sein. Der wenigstens eine Verbraucher 37 kann eine Hydraulikpumpe sein. Der wenigstens eine weitere Verbraucher 37 wird durch den elektrischen Motor 35 über das zweite Getriebe 36 mit Energie versorgt. Mit dem zweiten Getriebe 36 können mehrere weitere Verbraucher 37 verbunden sein, insbesondere koppelbar.

Der fünfte Wechselrichter 34, der elektrische Motor 35, das zweite Getriebe 36 und der wenigstens eine weitere Verbraucher 37 werden insbesondere als elektrischer Nebenantrieb 38 bezeichnet. Der elektrisches Nebenantrieb 38 ist über das Gleichspannungsnetz 20 mit der elektrischen Maschine 14 und/oder der Batterie 21 verbunden. Die Straßenbaumaschine 1 kann mehrere elektrische Nebenantriebe 38, beispielsweise zwei, drei oder vier elektrische Nebenantriebe 38, aufweisen. Die Nebenantriebe 38 können alle separate (seriell) mit dem Gleichspannungsnetz 20 verbunden sein. Exemplarisch ist in Fig. 6 nur ein elektrischer Nebenantrieb 38 dargestellt. Die in Fig. 4 und 5 gezeigten Ausführungsformen können ebenfalls im einen oder mehrere elektrische Nebenantriebe 38 erweitert werden.

## Patentansprüche

1. Straßenbaumaschine (1), insbesondere ein Straßenfertiger oder ein Beschicker, umfassend:
einen Primärantrieb (12),
eine elektrische Maschine (14),
ein Getriebe (13), und
wenigstens einen Verbraucher (16), der mit dem Getriebe (13) verbunden ist,
wobei
der Primärantrieb (12) und die elektrische Maschine (14) mit dem Getriebe (13), insbesondere kraftübertragend, leistungsübertragend und/oder energieübertragend, verbunden sind,
**dadurch gekennzeichnet, dass**
die elektrische Maschine (14) dazu ausgebildet ist, generatorisch und motorisch betrieben zu werden.

2. Straßenbaumaschine gemäß Anspruch 1, **dadurch gekennzeichnet, dass** der Primärantrieb (12) und die elektrische Maschine (14) jeweils direkt oder über eine Kupplung, insbesondere eine Hydraulikkupplung und/oder Reibkupplung, mit dem Getriebe (13) verbunden sind, oder
dass die elektrische Maschine (14) direkt oder über eine Kupplung, insbesondere eine Hydraulikkupplung und/oder Reibkupplung, mit dem Getriebe (13) verbunden ist und der Primärantrieb (12) indirekt über die elektrische Maschine (14) mit dem Getriebe (13) verbunden ist.

3. Straßenbaumaschine gemäß einem der vorhergehenden Ansprüche, **dadurch gekennzeichnet, dass** zwischen dem Primärantrieb (12) und dem Getriebe (13) keine Umwandlung in elektrische Energie erfolgt.

4. Straßenbaumaschine gemäß einem der vorhergehenden Ansprüche, **dadurch gekennzeichnet, dass** die Straßenbaumaschine (1) eine Batterie (21), insbesondere eine Hochvoltbatterie, umfasst, wobei die elektrische Maschine (14) dazu ausgebildet ist, die Batterie (21) mit erzeugter Energie zu laden und/oder die elektrische Maschine (14) dazu ausgebildet ist, mit Energie aus der Batterie (21) betrieben zu werden.

5. Straßenbaumaschine gemäß einem der vorhergehenden Ansprüche, **dadurch gekennzeichnet, dass** der Primärantrieb (12) das Getriebe (13) mechanisch und/oder hydraulisch antreibt.

6. Straßenbaumaschine gemäß einem der vorhergehenden Ansprüche, **dadurch gekennzeichnet, dass** der Primärantrieb (12) einen Verbrennungsmotor umfasst, insbesondere einen Dieselmotor, einen Wasserstoffmotor, einen Gasmotor oder einen Benzinmotor.

7. Straßenbaumaschine gemäß einem der vorhergehenden Ansprüche, **dadurch gekennzeichnet, dass** die elektrische Maschine (14) ein elektromechanischer Wandler, insbesondere eine permanenterregte Synchronmaschine (15), eine Asynchronmaschine, eine Reluktanzmaschine, eine fremderregte Synchronmaschine (33) oder eine Kombination davon, ist.

8. Straßenbaumaschine gemäß einem der vorhergehenden Ansprüche, **dadurch gekennzeichnet, dass** der wenigstens ein Verbraucher (16) eine Pumpe (17) mit variablem oder konstantem Verdrängungsvolumen, einen Fahrantrieb, eine Querverteilungseinrichtung und/oder eine Materialtransporteinrichtung umfasst, die insbesondere koppelbar mit Abtrieben des Getriebes (13) verbunden sind.

9. Straßenbaumaschine gemäß einem der vorhergehenden Ansprüche, **dadurch gekennzeichnet, dass** die Straßenbaumaschine (1) ein Gleichspannungsnetz (20) umfasst, das eine Bohlenheizung (10) der Straßenbaumaschine (1) und/oder Nebenantriebe (25, 27, 29) der Straßenbaumaschine (1) mit Energie versorgt, wobei das Gleichspannungsnetz (20) mit Energie aus der elektrischen Maschine (14) und/oder der Batterie (21) versorgt wird.

10. Straßenbaumaschine gemäß Anspruch 9, **dadurch gekennzeichnet, dass** eine Bohlenheizung (10) der Straßenbaumaschine (1) zwischen der elektrischen Maschine (14) und dem Gleichspannungsnetz (20) angeordnet ist, wobei die Bohlenheizung (10) insbesondere mit einer Verbindung zwischen der elektrischen Maschine (14) und dem Gleichspannungsnetz (20) oder direkt mit der elektrischen Maschine (14) koppelbar verbunden ist.

11. Verfahren zum Betrieb einer Straßenbaumaschine (1), die Straßenbaumaschine (1) umfassend wenigstens einen Primärantrieb (12), wenigstens eine elektrische Maschine (14) und wenigstens ein Getriebe (13), wobei
- in einem ersten Schritt das Getriebe (13) durch den Primärantrieb (12) angetrieben wird und die elektrische Maschine (14) über das Getriebe (13) generatorisch betrieben wird, und
- in einem zweiten Schritt die elektrische Maschine (14) motorisch betrieben wird und somit das Getriebe (13) durch die elektrische Maschine (14) angetrieben wird.

12. Verfahren zum Betrieb einer Straßenbaumaschine gemäß Anspruch 11, **dadurch gekennzeichnet, dass** im generatorischen Betrieb der elektrischen Maschine (14) eine Batterie (21) der Straßenbaumaschine (1) mit Energie geladen wird und im motorischen Betrieb der elektrischen Maschine (14) die elektrische Maschine (14) mit Energie aus der Batterie (21) betrieben wird.

13. Verfahren zum Betrieb einer Straßenbaumaschine gemäß Anspruch 11 oder 12,
**dadurch gekennzeichnet, dass** die Straßenbaumaschine (1) einen Verbraucher, insbesondere eine Bohlenheizung (10), aufweist, wobei während einem Einbauzustand der Straßenbaumaschine (1), der Verbraucher mit der elektrischen Maschine (14) verbunden ist und mit Energie aus der elektrischen Maschine (14) versorgt wird, und während einem Einbaustopp der Straßenbaumaschine (1) der Verbraucher von der elektrischen Maschine (14) getrennt ist und insbesondere mit Energie aus einer Batterie (21) versorgt wird.

14. Verfahren zum Betrieb einer Straßenbaumaschine gemäß einem der Ansprüche 11 bis 13, **dadurch gekennzeichnet, dass** in einem dritten Schritt das Getriebe (13) durch den Primärantrieb (12) angetrieben und die elektrische Maschine (14) von dem Getriebe (13) entkoppelt ist.

15. Verwendung eines parallelen Hybridantriebs, umfassend einen Verbrennungsmotor (12) und eine elektrische Maschine (14), in einer Straßenbaumaschine (1), insbesondere in einem Straßenfertiger (1).

## Geänderte Patentansprüche

### Geänderte Patentansprüche gemäss Regel 137(2) EPÜ.

1. Straßenfertiger (1), umfassend:
einen Primärantrieb (12),
eine elektrische Maschine (14),
ein Getriebe (13),
wenigstens einen Verbraucher (16), der mit dem Getriebe (13) verbunden ist,
eine Batterie (21), insbesondere eine Hochvoltbatterie, und
eine Bohlenheizung (10),
wobei der Primärantrieb (12) und die elektrische Maschine (14) mit dem Getriebe (13), insbesondere kraftübertragend, leistungsübertragend und/oder energieübertragend, verbunden sind, und
die elektrische Maschine (14) dazu ausgebildet ist, generatorisch und motorisch betrieben zu werden, und
der Straßenfertiger (1) dazu ausgebildet ist, die Bohlenheizung (10) mit Energie aus der elektrischen Maschine (14) und/oder der Batterie (21) zu versorgen.

2. Straßenfertiger gemäß Anspruch 1, **dadurch gekennzeichnet, dass** der Primärantrieb (12) und die elektrische Maschine (14) jeweils direkt oder über eine Kupplung, insbesondere eine Hydraulikkupplung und/oder Reibkupplung, mit dem Getriebe (13) verbunden sind, oder
dass die elektrische Maschine (14) direkt oder über eine Kupplung, insbesondere eine Hydraulikkupplung und/oder Reibkupplung, mit dem Getriebe (13) verbunden ist und der Primärantrieb (12) indirekt über die elektrische Maschine (14) mit dem Getriebe (13) verbunden ist.

3. Straßenfertiger gemäß einem der vorhergehenden Ansprüche, **dadurch gekennzeichnet, dass** zwischen dem Primärantrieb (12) und dem Getriebe (13) keine Umwandlung in elektrische Energie erfolgt.

4. Straßenfertiger gemäß einem der vorhergehenden Ansprüche, **dadurch gekennzeichnet, dass** die elektrische Maschine (14) dazu ausgebildet ist, die Batterie (21) mit erzeugter Energie zu laden und/oder die elektrische Maschine (14) dazu ausgebildet ist, mit Energie aus der Batterie (21) betrieben zu werden, wobei der Straßenfertiger (1) dazu ausgebildet ist, während eines Einbauzustands des Straßenfertigers (1) die Bohlenheizung (10) mit Energie aus der elektrischen Maschine (14) zu versorgen, und wobei der Straßenfertiger (1) dazu ausgebildet ist, während eines Einbaustopps des Straßenfertigers (1) die Bohlenheizung (10) mit Energie aus der Batterie (21) zu versorgen.

5. Straßenfertiger gemäß einem der vorhergehenden Ansprüche, **dadurch gekennzeichnet, dass** der Primärantrieb (12) das Getriebe (13) mechanisch und/oder hydraulisch antreibt.

6. Straßenfertiger gemäß einem der vorhergehenden Ansprüche, **dadurch gekennzeichnet, dass** der Primärantrieb (12) mit einem Antrieb des Getriebes (13) verbunden ist und die elektrische Maschine (14) mit einem Abtrieb des Getriebes (13) verbunden ist.

7. Straßenfertiger gemäß einem der vorhergehenden Ansprüche, **dadurch gekennzeichnet, dass** die elektrische Maschine (14) ein elektromechanischer Wandler, insbesondere eine permanenterregte Synchronmaschine (15), eine Asynchronmaschine, eine Reluktanzmaschine, eine fremderregte Synchronmaschine (33) oder eine Kombination davon, ist.

8. Straßenfertiger gemäß einem der vorhergehenden Ansprüche, **dadurch gekennzeichnet, dass** der wenigstens ein Verbraucher (16) eine Pumpe (17) mit variablem oder konstantem Verdrängungsvolumen, einen Fahrantrieb, eine Querverteilungseinrichtung und/oder eine Materialtransporteinrichtung umfasst, die insbesondere koppelbar mit Abtrieben des Getriebes (13) verbunden sind.

9. Straßenfertiger gemäß einem der vorhergehenden Ansprüche, **dadurch gekennzeichnet, dass** die Straßenbaumaschine (1) ein Gleichspannungsnetz (20) umfasst, das eine Bohlenheizung (10) der Straßenbaumaschine (1) und/oder Nebenantriebe (25, 27, 29) der Straßenbaumaschine (1) mit Energie versorgt, wobei das Gleichspannungsnetz (20) mit Energie aus der elektrischen Maschine (14) und/oder der Batterie (21) versorgt wird.

10. Straßenfertiger gemäß Anspruch 9, **dadurch gekennzeichnet, dass** eine Bohlenheizung (10) der Straßenbaumaschine (1) zwischen der elektrischen Maschine (14) und dem Gleichspannungsnetz (20) angeordnet ist, wobei die Bohlenheizung (10) insbesondere mit einer Verbindung zwischen der elektrischen Maschine (14) und dem Gleichspannungsnetz (20) oder direkt mit der elektrischen Maschine (14) koppelbar verbunden ist.

11. Verfahren zum Betrieb eines Straßenfertiger (1), der Straßenfertiger (1) umfassend wenigstens einen Primärantrieb (12), wenigstens eine elektrische Maschine (14), eine Batterie (21), eine Bohlenheizung (10) und wenigstens ein Getriebe (13), wobei
- in einem ersten Schritt das Getriebe (13) durch den Primärantrieb (12) angetrieben wird und die elektrische Maschine (14) über das Getriebe (13) generatorisch betrieben wird, und
- in einem zweiten Schritt die elektrische Maschine (14) motorisch betrieben wird und somit das Getriebe (13) durch die elektrische Maschine (14) angetrieben wird, wobei die Bohlenheizung (10) mit Energie aus der elektrischen Maschine (14) und/oder der Batterie (21) versorgt wird.

12. Verfahren zum Betrieb eines Straßenfertigers gemäß Anspruch 11, **dadurch gekennzeichnet, dass** im generatorischen Betrieb der elektrischen Maschine (14) eine Batterie (21) der Straßenbaumaschine (1) mit Energie geladen wird und im motorischen Betrieb der elektrischen Maschine (14) die elektrische Maschine (14) mit Energie aus der Batterie (21) betrieben wird.

13. Verfahren zum Betrieb eines Straßenfertigers gemäß Anspruch 11 oder 12, **dadurch gekennzeichnet, dass** die Straßenbaumaschine (1) einen Verbraucher, insbesondere eine Bohlenheizung (10), aufweist, wobei während einem Einbauzustand der Straßenbaumaschine (1), der Verbraucher mit der elektrischen Maschine (14) verbunden ist und mit Energie aus der elektrischen Maschine (14) versorgt wird, und während einem Einbaustopp der Straßenbaumaschine (1) der Verbraucher von der elektrischen Maschine (14) getrennt ist und insbesondere mit Energie aus einer Batterie (21) versorgt wird.

14. Verfahren zum Betrieb eines Straßenfertigers gemäß einem der Ansprüche 11 bis 13, **dadurch gekennzeichnet, dass** in einem dritten Schritt das Getriebe (13) durch den Primärantrieb (12) angetrieben und die elektrische Maschine (14) von dem Getriebe (13) entkoppelt ist.

15. Verwendung eines parallelen Hybridantriebs, umfassend einen Verbrennungsmotor (12) und eine elektrische Maschine (14), in einem Straßenfertiger (1) zum abwechselnden Betreiben einer Bohlenheizung (10) des Straßenfertigers (1) aus der elektrischen Maschine (14) oder einer Batterie (21) des Straßenfertigers (1).
